# EUROPEAN PATENT APPLICATION

(11) **EP 3 936 988 A1**
(43) Date of publication of application: **12.01.2022**
(21) Application number: 21178106.7
(22) Date of filing: 28.07.2015
(51) Int. Cl.: G06F 3/048, G06Q 30/06, G06F 3/0481

(54) **A COMPUTING DEVICE, SYSTEM, METHOD, COMPUTER PROGRAM AND DATA SIGNAL ARRANGED TO FACILITATE THE DISPLAY OF INFORMATION**

(30) Priority: 28.07.2014 AU 2014902906
(62) Divisional of application: 15827199.9
(71) Applicant: Between The Flags (aust) Pty Ltd, Pyrmont, NSW 2009 (AU)
(72) Inventor: LOCKWOOD, David John, Bensville, 2251 (AU); OAYDA, Grant, Pyrmont, 2030 (AU)
(74) Representative: Cameron Intellectual Property Ltd

(57) **Abstract**

A system for generating an interface, comprising a computing system including a processor arranged to execute an algorithm which includes at least one rule; wherein the algorithm utilises the rule and at least one parameter value to allocate an element of an interface to the display of a representation of at least one item.

## Description

### Technical Field

The present invention relates to a computing device, system, method computer program and data signal arranged to facilitate the display of information. Embodiments of the invention find particular, but not exclusive, use in the field of providing a system for providing a retail interface to allow consumers to interact with a retailer.

### Background Art

E-commerce websites are known. With the advent of the Internet, advances in logistics and other developments in electronics and communications, there has been a large increase in the number of businesses engaged in so-called *"online retailing".*

Many companies, large and small, now have either a partial or total presence *"online".* However, despite millions of businesses now having an online presence, little has fundamentally changed with respect to how online e-commerce sites and stores operate. The traditional *"shopping cart"* model used by e-commerce sites has remained fundamentally the same since the advent of online e-commerce shopping carts in the late 1990s.

With the ubiquitous uptake of mobile communication devices (i.e. mobile, cell and/or *'smart'* phones) consumers are now seeking ways to interact with businesses (and in particular retailers) via their mobile phone.

Existing solutions that utilise mobile or smart phones rely on the same fundamental underlying model of using a *"shopping cart"* and displaying items for purchase in a typical webpage format. There is a need to provide a cost-effective, easy to use and efficient online transaction system which can be utilised by all businesses, whether they be large or small.

### Summary of the Invention

In a first aspect, there is provided a system for generating an interface, comprising:
a computing system including a processor arranged to execute an algorithm which includes at least one rule;
wherein the algorithm utilises the rule and at least one parameter value to allocate an element of an interface to the display of a representation of at least one item.

The at least one parameter may be located in a database.

The at least one parameter may be related to an attribute of the at least one item.

There may be provided a second interface arranged to allow a user to vary the at least one parameter.

In a second aspect, there is provided an electronic method for generating an interface, comprising the steps of:
executing an algorithm which includes at least one rule;
wherein the algorithm utilises the rule and at least one parameter value to allocate a portion of an interface to the display of a representation of at least one item.

In a third aspect, there is provided a computer program, including at least one instruction capable of being executed by a computing system, which implements a method in accordance with the second aspect of the invention.

In a fourth aspect, there is provided a computer readable medium including a computer program in accordance with the third aspect of the invention.

In a fifth aspect, there is provided a data signal including at least one instruction being capable of being received and interpreted by a computing system, wherein the one instruction, on being interpreted by the computing system, implements a method in accordance with the second aspect of the invention.

### Brief Description of the Drawings

Further features of the present invention are more fully described in the following description of several non-limiting embodiments thereof. This description is included solely for the purposes of exemplifying the present invention. It should not be understood as a restriction on the broad summary, disclosure or description of the invention as set out above. The description will be made with reference to the accompanying drawings in which:
Figure 1 is an example computing system which is capable of operating a system, method computer program and/or data signal in accordance with an embodiment of the present invention;
Figure 2 is a system in accordance with an embodiment of the present invention;
Figure 3 is a schematic diagram illustrating the interaction between different operational layers in an embodiment of the present invention; and
Figures 4 to 6 are screenshots of an interface in accordance with an embodiment of the present invention.

### Description of Embodiments

### General Overview

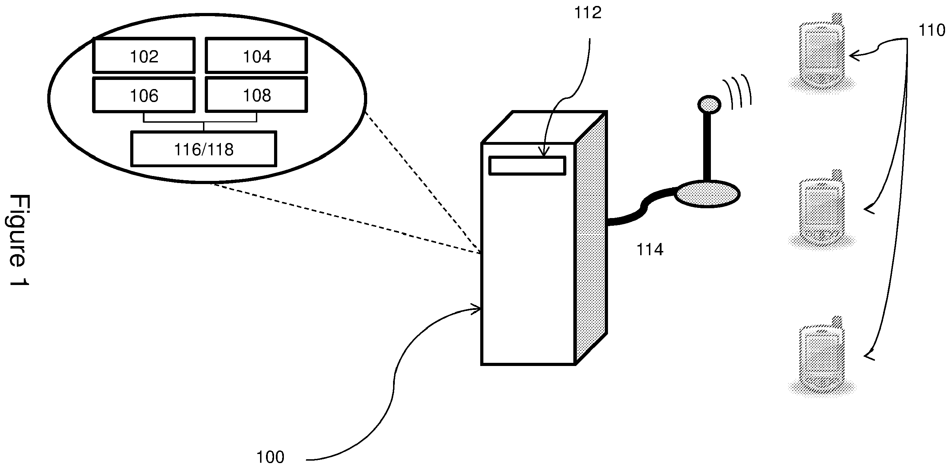

Referring to Figure 1, there is shown an example computing system which is capable of facilitating transactions in accordance with an embodiment of the present invention.

In Figure 1 there is shown a schematic diagram of a computing system, which in this embodiment is a server 100 suitable for use with an embodiment of the present invention. The server 100 may be used to execute application and/or system services such as a system and method for facilitating the transfer of value (i.e. an electronic financial transaction) in accordance with an embodiment of the present invention.

With reference to Figure 1, the server 100 may comprise suitable components necessary to receive, store and execute appropriate computer instructions. The components may include a processor 102, read only memory (ROM) 104, random access memory (RAM) 106, an input/output devices such as disc drives 108, remote or connected input devices 110 (such as a mobile computing device, a smartphone or a *'desktop'* personal computer), and one or more communications link(s) 114.

The server 100 includes instructions that may be installed in ROM 104, RAM 106 or disc drives 112 and may be executed by the processor 102. There may be provided a plurality of communication links 114 which may variously connect to one or more computing devices 110 such as servers, personal computers, terminals, wireless or handheld computing devices, or mobile communication devices such as a mobile (cell) telephone. At least one of a plurality of communications link 114 may be connected to an external computing network through a telecommunications network.

In one particular embodiment the device may include a database 116 which may reside on the storage device 112. It will be understood that the database may reside on any suitable storage device, which may encompass solid state drives, hard disc drives, optical drives or magnetic tape drives. The database 116 may reside on a single physical storage device or may be spread across multiple storage devices.

The server 100 includes a suitable operating system 118 which may also reside on a storage device or in the ROM of the server 100. The operating system is arranged to interact with the database and with one or more computer programs to cause the server to carry out the steps, functions and/or procedures in accordance with the embodiments of the invention described herein.

Broadly, the invention relates to a computing device and system arranged to interact with one or more remote devices via a communications network. The system, in one embodiment, comprises a server including a database arranged to facilitate a transaction from one entity to another (e.g. a retailer to a consumer). The database is arranged to receive and transmit information via the communications network from the one or more remote devices.

Other aspects of the broad inventive concept relate to a corresponding method and data signal. The method facilitates the transaction between two or more entities via one or more remote devices and a centralized database. The centralized database receives a request from the remote devices to facilitate the transfer of value, and utilises a communications network to transfer value via the one or more remote devices. The requests may be sent in the form of a data signal which includes, in part or in whole, encoded information which provides one or more commands to the centralized database and/or the remote devices, to implement the aforementioned method.

The database is arranged to contain various types of information. In more detail, the database is arranged to hold information regarding items for sale.

### System Overview

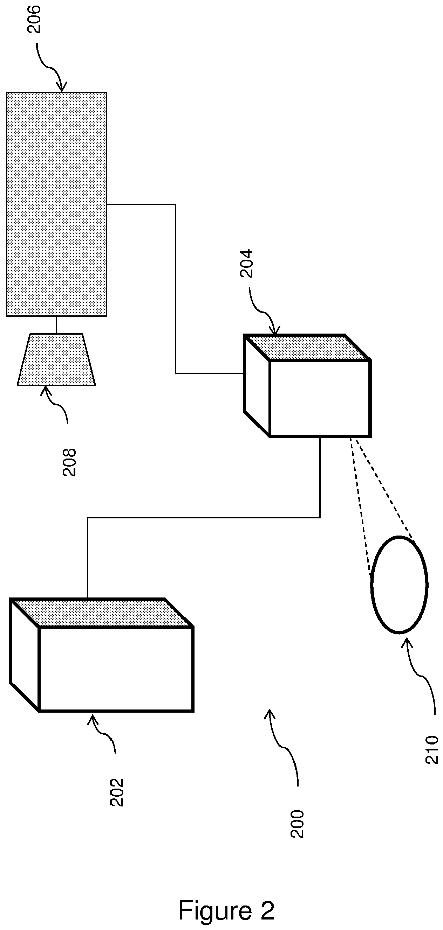

Referring now to Figure 2, there is shown a system in accordance with an embodiment of the present invention where there is provided a central server which interfaces with a local server. The system 200 includes a central server 202 which is in communication with a local server 204. The local server 204 is in communication with a display screen 206 which is arranged to provide an interface (which may or may not have associated speakers 208). Such a system may be used in a retail environment, where the central server 202 represents a server that resides in a 'head office' of a retail entity, and local server 204 represents a local server that resides in a retail outlet of the retail entity. In the ensuing description, where reference is made to an application in accordance with an embodiment of the invention, it will be understood that the functionality and location of the application may be distributed across one or more of a central server (such as central server 202) a local server (such as local server 204) and/or a display screen (such as display screen 206). Such variations are within the purview of a person skilled in the art.

The InStock^{™} Digital Visual Merchandiser is a platform which presents stock in a digital format in a manner that is more engaging for the consumer while more effectively reflecting the product mix and/or sales goals of the retailer, automatically.

The focus of the InStock^{™} Digital Visual Merchandiser (dVM) is to allow the retailer to merchandise a digital screen as they would their store, automatically. It can be applied to web sites, in store kiosks, digital signage and hand held tablet/pad style devices.

In summary, the InStock^{™} dVM automatically allocates space to icons (buttons) representing different products, categories, sub-categories, advertising or marketing banners, URL links or video. The dVM automatically decides icon size, shape and location on the screen prioritised by predetermined business rules. Allocation can be determined by a number of ways including; amount of stock on hand, budgeted sales, highest to lowest gross margin, supplier rebate/gross margin, shelf life, previous purchases made by the viewer or algorithms derived from historical data. Combinations or blends of these criteria can also be used and the criteria can be expanded upon to meet the customer's requirements.

Once the automatic allocation/layout is completed, it can be "fine-tuned" by a merchandising interface that allows adjustment of icon size/positioning by a simple "click and drag" process. Access to this function can be set with various levels of authorisation. If an icons space allocation is changed, the remaining area is automatically reallocated proportionately. E.g., if an icon is "dragged" from 25% to 40% each remaining icon on the screen is reduced in size proportionately.

Flexibility is a key element in enabling sales, merchandising and marketing personnel to;
- take control of the appearance of a web site/kiosk in a manner to allow the presentation of product to be more aligned with the manner in which the product is displayed on the shop floor
- apply years of knowledge of consumer behaviour learnt from traditional bricks and mortar retailing to web/kiosk presentation
- immediately react to meet market demands either influencing an entire market or specific location.

Basic retail principles become the driver of the presentation to the consumer which is through the dVM controlled directly by those responsible for achieving managements' goals.

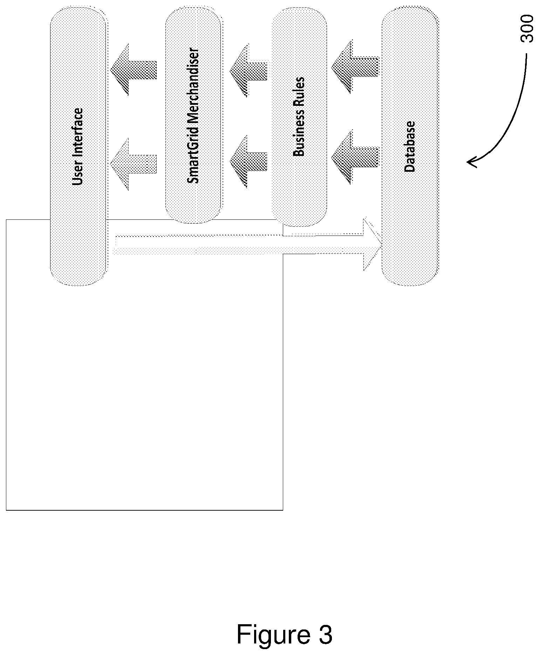

Referring now to Figure 3, there is shown a flowchart 300 for a product which is known as the *"InStock^{™} SmartGrid Merchandiser"* (or alternatively called the Digital Visual Merchandiser or DVM) and will hereinafter be referred to as the *"dVM"* application. The DVM application provides a system, method, computer program and data signal which is capable of presenting merchandise for sale in a digital format that is more engaging for the consumer while more effectively reflecting the product mix and/or sales goals of the retailer.

In other words, the system, method, computer program and data signal provide a new way for consumers to interact with a computing interface in an intuitive manner.

In one embodiment, the DVM application provides an interface which allows the retailer to populate a digital screen with representations of merchandise in a manner that is analogous to the manner in which a retailer would populate shelves in a physical store. The manner in which the digital screen is populated is determined by an algorithm which incorporates one or more business rules, in addition to parameters that are either preset in the DVM application, or in some embodiments, are capable of being varied by the retailer, either in a static or dynamic manner.

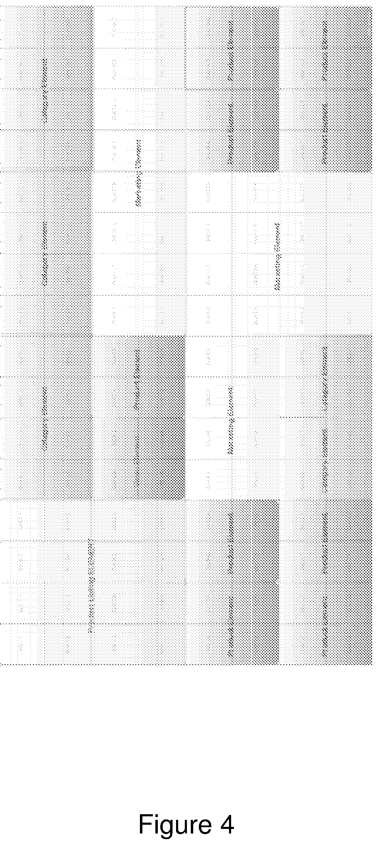

Referring now to Figure 4, the DVM application operates by automatically allocating space to icons (buttons) representing different products, categories, sub-categories, advertising or marketing banners, URL links or links to video clips.

The DVM application automatically determines the icon size, shape and relative location on the screen through the use of an algorithm that includes one or more predetermined business rules.

The allocation business rules can include one or more values or parameters which may trigger conditions dependent on the numerical values of the values or parameters. Such parameters may include the amount of stock on hand, budgeted sales figures, the gross margin on each item, supplier rebate/gross margin, the shelf life of the item, previous purchases made by the viewer or other parameters derived from historical data. Combinations or blends of these criteria may also be used and the criteria can be expanded upon to meet the customer's requirements.

In more detail, screen space allocation can be determined by business rules or factors such as but not limited to:
- Stock levels (by quantity or dollar value)-the total space allocated to category, sub-category or SKU or any combination based of stock levels available;
- Budgeted Sales—the total space allocated based on projected sales/sales targets;
- Product margins—the total space allocated based on highest to lowest gross margin or lowest to highest;
- Supplier rebate—the total space allocated based on a negotiation with a supplier based on a rebate or discount;
- Historical sales—he total space allocated based on the total sales, e.g. select top X number or bottom Y number of products/categories/sub-categories from same period in previous year;
- Shelf life ― the total space allocated based on shelf life, e.g. allocate more space to products with shortest remaining shelf life; and/or
- Transaction History—the total space allocated (after customer identification) based on a particular customers browse/purchasing history.

Once the automatic allocation/layout is completed, the space allocation can be *"fine-tuned"* by use of a merchandising interface that allows a user to manually adjust the size of the icon and/or the positioning of the icon by use of a simple and intuitive *"click and drag"* process. Access to this function can be restricted by providing a multi-level authorization. That is, a buyer at head office may be able to make any changes they wish to the interface, but a store manager may only make limited changes to the interface.

In one embodiment, if an icons space allocation is changed, the remaining area is automatically reallocated proportionately e.g. if an icon is *"dragged"* from 25% to 40% each remaining icon on the screen is reduced in size proportionately.

The embodiment described herein also provides a number of additional technical advantages. For example, the embodiment provides a simplified deployment of the user interface by utilising a standardised set of elements providing full functionality for the necessary actions within the application as required.

The embodiment manages the size of the elements based on most appropriate and effective use of space available. This can be based on technical or business rules.

The embodiment may be integrated with the retailer's internal systems allowing for increased effectiveness in the determination of the most appropriate products, categories and sub categories to be displayed.

Importantly, the combination of automated populating of the interface, with the ability to provide a level of 'manual' customization provides direct control of merchandising to merchandisers. The simplicity of the *"click and drag"* operator interface enables merchandisers to have direct input (often creative) into the user interface presented to the consumer.

The simplified interface allows direct control of ongoing modification of existing advertising campaigns so that the retailer is able to work close to the market by enabling immediate changes to be made as the market reactions become evident.

Moreover, the automation of the interface reduces issues that arise due to the natural disconnect between the creative merchandising process and the static nature of priorities set by business rules. The automated space allocation feature, set by business rules, set parameters that the creative and promotional skills of the marketing operator can work within, using the simple click and drag operator interface.

Importantly, however, as the rules are dynamic and adapt to a number of parameters, such as automatic adjustment according to stock levels. For example, space can be reallocated automatically once a line sells out or as stock levels vary over the course of a period of time. Changes can be made immediately if a retailer decides to change their marketing direction or priorities. Such flexibility is only available because of the hybrid nature of automated business rules combined with a manual *"fine tuning"* capability.

This in turn allows the DVM interface to automatically allocate the same exposure to offers irrespective of whether the customer is interacting with the interface via a web interface, an in store kiosk interface or even interacting with digital signage. In other words, the interface provides a consistent 'look and feel' to all electronic material provided by the retailer.

However, where different sites have specific local requirements (e.g. one store may run out of stock of Product X but another store may have plenty of stock of product X), one embodiment provides multi-site customisation which enables digital merchandising specific to a location.

### Element Attributes

Each element has attributes that are variable and determine what function the element has on the interface. There are several attributes related to each element that determine its properties:
- Size Grid coverage pattern ― eg 1×1, 2×2, 2×4, etc
- Position Position on the grid
- Media File name of: Image, animation, movie, etc
- Action On-click action URL (to Kiosk resource, local resource or external resource)
- Group Element is part of a group of media that is in timed rotation for this block
- Security Permissions for changing the element
- Auditing Logging changes eg if element is part of campaign etc.

Each of the attributes can be set manually or automatically determined by security level. Selected elements' attributes can be set manually initially with the balance of the remaining allocated automatically. Elements attributes allocated automatically can be adjusted manually. Elements attributes allocated automatically are determined by business rules based on metadata supplied from the InStock^{TM} system. In some cases, some attributes of an element can be set manually while others are left to be set automatically. A selection of elements with existing attributes can be "frozen" so that remaining elements can be automatically re-configured. A business rule allocation can be confined to a set selection of elements. Auto allocation of element size can work within min-max guideline.

In addition, the interface provides accurate data on user interface effectiveness. Retailers are able to review the effectiveness of their user interface marketing efforts through reporting showing the return on space allocated (per square inch) instantly and on a *"live"* basis.

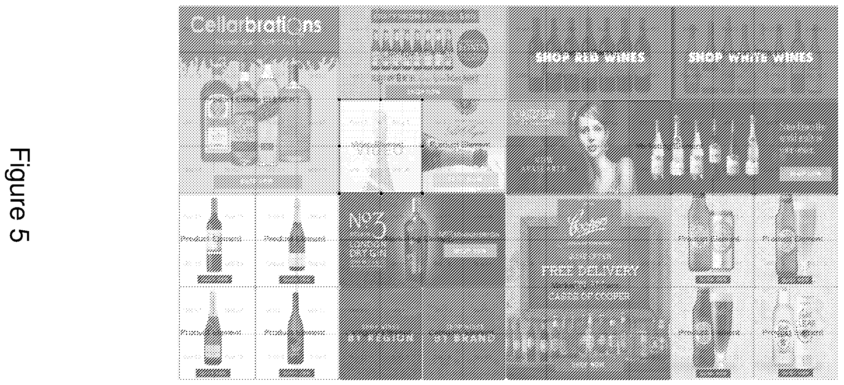

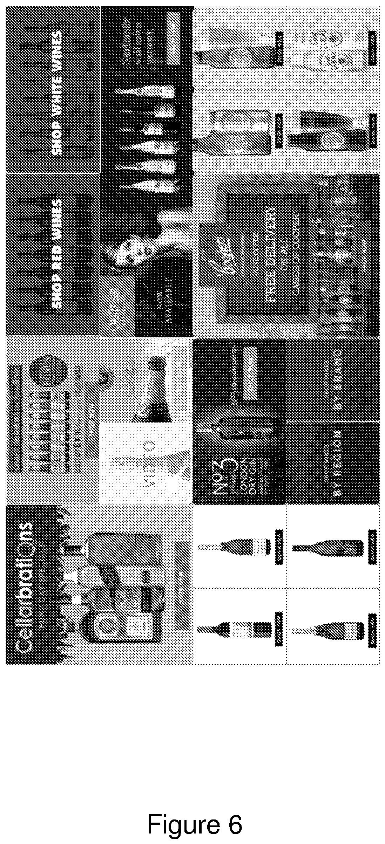

The DVM interface provides the retailer with a grid presentation. A sample of this grid is shown with reference to Figures 4, 5 and 6. Each square created by the grid is an *"element"* or a number of squares can be combined to form a larger element. In turn, each element has attributes that are variable and determine what function the element has on the interface.

There are two types of attributes, namely an action item (i.e. what occurs when a consumer 'clicks' on the element) and an appearance item (i.e. what is the appearance of the element).

In one example, action items may include going to a SKU, going to a Category, going to a sub-category, going to a blank page, going to another URL and going to video.

Correspondingly, the appearance attribute may include the size of the item, the format of the item, and the image/animation in the item.

Each of the attributes may be set manually or automatically. For example, in one embodiment some elements' attributes may be set manually initially with the balance of the remaining allocated automatically.

Elements attributes allocated automatically may be determined by business rules based on metadata.

Key to the offering is the dVM engine that analyses a set of data inputs and generates the most appropriate layout based on factors determined by the business.

The ability for the retailer to be able to control the merchandising of their kiosk at an individual store level, to the same extent they merchandise their bricks and mortar environments, is integral to the dVM solution. The retailer has the most intimate knowledge of their customers and the dVM is designed with this in mind, along with ensuring compliance of corporate marketing directives and initiatives to ensure a consistent brand message is delivered.

### Input Sources

The InStock Digital Visual Merchandiser will use input data from multiple sources that may include;
- Catalogue and Historical - Data provided by the InStock system from transactions, browsing history and previous Kiosk DVM campaigns.
- Campaign rules ― Supplier, Brand or other types of marketing campaigns.
- External Inputs ― Retailers line of business system such as ERP, POS, CRM or external offerings such as real time weather, nearby events, competitor information, social media, etc. The InStock InTouch Service Layer allows connectivity with the majority of systems available.
- Weighting Rules ― rules for giving greater precedence (size and/or position and/or time) for media or categories. Allows the retailer at a group, territorial or store level to customise and prioritise the weighting for rules for the particular kiosk.

The data inputs are processed through the dVM engine using a deterministic heuristic analysis algorithm to provide the most appropriate default screen layout for the kiosk site.

The process will involve cloud based predictive analysis (heuristic) based on the sets of inputs combined with rules based result weighting (deterministic). This will resolve the results to generate an optimal default layout and additionally return a set of possible alternate layouts based on headings such as Best Sellers, Hero Products, Gross Margin, etc (determined by the retailer) to assist the retailer in deciding which items to choose for their particular kiosk site.

### Manual Override

The results of the previous step will display into the dVM designer. This is a browser based design surface, allowing a user to manually adjust a generated layout.

A retailer may choose to make adjustments to the default grid layout, allowing flexibility for territorial or even store level modifications to maximise the effectiveness of the screen layout to best suit the local customers' requirements. Modifications will be allowed up to a certain point based on security levels and group level marketing commitments.

### Generation

dVM Designer will generate the screen layout based on the outputs from the analysis performed from the dVM Engine. The dVM is a browser based, menu driven solution to provide ease of product editing or selection for the retailer. Functions include;
- Add/remove ― bring up weighted artefact list window, drag/drop on/off designer page
- move
- reset page
- size
- view properties ― bring up properties window:
- Name
- Mandatory(true/false)
- Link to (Category, product, page, media, external URL, etc)
- Time based display rules (eg 6hrs/day, between 7am-10am & 3pm-6pm)

The retailer can override the selection made by the dVM engine if required. Options are presented in an artifact list window to the retailer for new parameter driver selection or the retailer can select a product by SKU. These are referred to as "hero" product selections.

Example Hero Product Selection Artifacts can include top sellers by Brand, GP, Period, Last Year, Last Month, Actual vs Budget, Stock, Excess Stock, Low Stock Turns and/or SKU.

### Technical Problems Addressed and Industrial Applicability

The embodiments and broader inventive concept described herein ameliorates the requirement for specific programming/technical skills. Digital change has brought an additional layer of processes to the marketing function that involves technical skills that are not normally a part of a marketing team thus requiring engagement of technically skilled people. The automation of dVM eliminates the requirement for programming/technical skills in the digital marketing process.

Moreover, the embodiment enables flexible and specific merchandising in a digital environment. Current web sites still rely on an interaction requiring a "search for file" initiation by the purchaser. Some items can be highlighted though not in any substantially relevant way and usually in a manner that is difficult to change quickly or customise to an individual level. The current digital interaction between retailer and customer continues to have a requirement for substantial technical input and is relatively inflexible. This limits the retailers' ability to engage and interact with the consumer, it allows them to present product but not "promote to sell" or engage in the true merchandising sense, a function that is at the core of modern retailing.

dVM allows core traditional merchandising functions to be applied to digital marketing on web sites, in store kiosks and digital signage, by merchandising specialists.

In addition, dVM allows for the analysis of metadata to help determine automatically the most appropriate proportionate allocation of screen space for products, categories and sub categories. Screen space allocation can be determined by business rules or factors such as but not limited to;
- Stock levels - (by quantity or dollar value) Space allocated to category, sub-category or SKU or any combination based of stock levels available.
- Budgeted Sales - Allocation based on projected sales/sales targets.
- Product margins - from highest to lowest gross margin or lowest to highest.
- Supplier rebate - Allocation is negotiated with a supplier based on a rebate or discount.
- Historical sales - E.g. Select top X number or bottom x number of products/categories/sub-categories from same period in previous year.
- Shelf life - E.g. allocate more space to products with shortest remaining shelf life.
- Transaction History - Space is allocated (after customer identification) based on a particular customers browse/purchasing history.
- Algorithms derived from historical data.
- Combinations or blends of these criteria can also be used.

Importantly, dVM is a technical solution that provides direct control of merchandising to merchandisers. The simplicity of the dVM "click and drag" operator interface enables the trained merchandisers to have direct input (often creative) into the UX presented to the consumer. The simplified interface;
- Allows direct control of ongoing modification of existing campaigns so that the retailer is able to work close to the market by enabling immediate changes to be made as the market reactions become evident.
- The removal of technical staff in the process removes room for error by misinterpretation, saves time and allows for ease of fine tuning.
- Reduces the issues that arise due to the natural disconnect between the creative merchandising process and the static nature of priorities set by business rules. The automated space allocation feature, set by business rules, set parameters that the creative and promotional skills of the marketing operator can work within, using the simple click and drag operator interface.
- Automatic Adjustment. Advertising space can be reallocated automatically once a line sells out or as stock levels move. Changes can be made immediately if the business needs to change its marketing direction or priorities.
- Automatic co-ordination of web and store promotional/marketing programmes.

The dVM automatically allocates the exposure apportioned to offers made to the consumer on the web, in store kiosk and digital signage simultaneously. Exposure can be measured in terms of screen space or in the case of digital signage measured by the time of exposure for each slide/image.
- Multi-site customisation enables digital merchandising specific to a location when the dVM is being used for in store kiosks or digital signage.
- Multi-level security settings align with the retailers internal structures to ensure the correct employees are making the amendments.
- Accurate data on user interface effectiveness. Retailers will be able to see the effectiveness of their user interface marketing efforts through reporting showing the return on space allocated (per square inch) instantly and on "live" basis.
- Shopper Marketing. Sections of the dVM can be frozen/locked down to be excluded from dynamic screen space allocation

These advantages are achieved through the provision of a standardised set of elements that can be used. The size of the element dictionary can be controlled extensively by the retailer head office team or variable levels of control can be left to the in store team.

Moreover, the functionality of the action the element performs is managed by the application thereby creating an additional level of stability to the solution.

In addition, the time required for deployment for retailers is dramatically reduced as the only changes required involve the user interface. Management and control of the functionality to be utilised by the user interface is browser based via the InStock^{™} back of house utilising the same user access controls to meet the appropriate authorisations. Changes made through this interface can be easily published to all applicable kiosks and reflected in the interface and functionality of the system instantly.

Moreover, the separation of the interface from the application controlled by a kiosk management file provides for simplified and structured deployments.

In other words, the embodiments and broader inventive concept provide a number of advantages. Firstly, there is provided an interface which customers and consumers can interact with in a more natural and fluid manner, as the interface 'apes' the layout of a traditional store. Such an interface is therefore of particular benefit to consumers that are less familiar with computer technology and online 'shopping cart' technology.

Moreover, as the interface is automatically generated, the retailer can create or build the interface without needing to understand any detail regarding the manner in which an interface is traditionally constructed or laid out. In other words, the retailer does not need to understand or learn any specific skills with regard to computer programming or interface design.

In addition, where the interface changes dynamically dependent on one or more business rules, there is no need for the retailer to perform routine maintenance on the interface, yet the interface remains optimized and thereby delivers the best possible sales outcome, without the need for any specific input from the retailer.

Furthermore, the automation of business functionality to determine the most appropriate selection of products to highlight alleviates the requirements for the retailer to perform in-depth analysis of metadata.

Moreover, the flexibility of the DVM is a key element in enabling sales, merchandising and marketing personnel to control the appearance of the grid in a manner to allow the presentation of product to be more aligned with the manner in which the product is displayed on the shop floor, thereby drawing on years of knowledge of consumer behaviour learnt from traditional bricks and mortar retailing.

In other words, retail principles which have proven effective in a bricks and mortar sales environment but which retailers have been unable to successfully translate into an online environment (due to the fundamentally different nature of a traditional website or shopping cart) are successfully used and become the driver of the presentation to the consumer.

The system, method, computer program and data signal in accordance with the embodiment described herein finds use in any situation where a retailer wishes to optimize both online and in-store transactions. Moreover, the system, method, computer program and data signal can find use in any situation (i.e. non-sales situations) where a user needs to be 'drawn' to a particular section of the interface.

### Variations and Modifications

It will be understood that the embodiments and broader invention described herein are provided via a webpage interface, but may also be provided by an *'App',* namely a software application arranged to operate on a mobile device, such as a smartphone or a tablet computing system. Moreover, the embodiments and broader invention may also be encoded in firmware or integrated into an operating system for a device, as required for any particular use. For example, a dedicated Point of Sale terminal (such as an electronic 'Kiosk') may be utilised to display the interface to a customer in accordance with an embodiment of the invention. The use of hardware devices (as opposed to software devices) may provide particular advantages, such as the ability to better secure communication channels and/or the ability to perform transactions in less time (which may be important in a busy environment). Such variations are encompassed by the broader inventive concept described herein.

It will also be understood that while the examples described herein are directed to use in a retail or 'sales' environment, embodiments of the invention may find use in applications where a provider of the application may wish to 'draw' a user to a particular section of the interface. For example, websites operated by emergency services, government authorities, or other entities that require their websites to be updated on a regular basis, may use an embodiment of the invention to ensure that viewers of the website are drawn to the most relevant material on the website.

Although not required, the embodiments described with reference to the figures can be implemented via an application programming interface (API), an application development kit (ADK) or as a series of libraries, for use by a developer, for the creation of software applications which are to be used on any one or more computing platforms or devices, such as a terminal or personal computer operating system or a portable computing device, such as a smartphone or a tablet computing system operating system, or within a larger server structure, such as a *'data farm'* or within a larger transaction processing system.

Generally, as program modules include routines, programs, objects, components and data files that perform or assist in the performance of particular functions, it will be understood that the functionality of the software application may be distributed across a number of routines, programs, objects or components to achieve the same functionality as the embodiment and the broader invention claimed herein. Such variations and modifications are within the purview of those skilled in the art.

It will also be appreciated that where methods, systems computer programs and data signals of the present invention and/or embodiments are implemented by computing systems or partly implemented by computing systems then any appropriate computing system architecture may be utilised. This includes standalone computers, network computers and dedicated computing devices (such as field-programmable gate arrays).

Where the terms *"computer", "computing system"* and *"computing device"* are used in the specification, these terms are intended to cover any appropriate arrangement of computer hardware for implementing the inventive concept and/or embodiments described herein.

It will be understood that where terms such as *"customer", "consumer", "retailer", "user",* etc. are used to describe an entity that interacts with embodiments of the system, method, computer program and data signal described herein, these terms are provided solely to provide context to the specific embodiments described herein, such that a reader may better understand one possible use of the embodiment, and no 'gloss' should be taken from the use of such colloquial terms to limit or narrow the scope of the embodiments and or broader inventive concept described and defined herein.

Further disclosure is provided below:
1. A system for generating an interface, comprising:
   a computing system including a processor arranged to execute an algorithm which includes at least one rule;
   wherein the algorithm utilises the rule and at least one parameter value to allocate an element of an interface to the display of a representation of at least one item.
2. A system in accordance with clause 1, wherein the at least one parameter value is accessed in a database.
3. A system in accordance with clause 2, wherein the at least one parameter is related an attribute of the at least one item.
4. A system in accordance with any one of clauses 1 to 3, wherein the rule includes at least one of a historical screen allocation algorithm.
5. A system in accordance with any one of the preceding clauses, wherein there is provided a second interface arranged to allow a user to vary the at least one parameter.
6. A system in accordance with clause 5, wherein the second interface is arranged to allow a user to override the allocation of the element of the interface to the display of the representation of an item.
7. A system in accordance with clause 6, further including at least another rule arranged to vary the allocation of the element of the interface of at least one other item in response to the user overriding the allocation of the portion of the interface.
8. An electronic method for generating an interface, comprising the steps of:
   executing an algorithm which includes at least one rule;
   wherein the algorithm utilises the rule and at least one parameter value to allocate a portion of an interface to the display of a representation of at least one item.
9. A method in accordance with clause 8, comprising the further step of periodically iterating the method steps of clause 8.
10. A computer program, including at least one instruction capable of being executed by a computing system, which implements a method in accordance with clause 8.
11. A computer readable medium including a computer program in accordance with clause 8.
12. A data signal including at least one instruction being capable of being received and interpreted by a computing system, wherein the one instruction, on being interpreted by the computing system, implements a method in accordance with clause 8.

## Claims

1. A system for generating an interface, comprising:
a computing system including a processor arranged to execute an algorithm which includes at least one rule;
wherein the algorithm utilises the rule and at least one parameter value to allocate an element of an interface to the display of a representation of at least one item.

2. A system in accordance with Claim 1, wherein the at least one parameter value is accessed in a database.

3. A system in accordance with Claim 2, wherein the at least one parameter is related an attribute of the at least one item.

4. A system in accordance with any one of Claims 1 to 3, wherein the rule includes at least one of a historical screen allocation algorithm.

5. A system in accordance with any one of the preceding claims, wherein there is provided a second interface arranged to allow a user to vary the at least one parameter.

6. A system in accordance with Claim 5, wherein the second interface is arranged to allow a user to override the allocation of the element of the interface to the display of the representation of an item.

7. A system in accordance with Claim 6, further including at least another rule arranged to vary the allocation of the element of the interface of at least one other item in response to the user overriding the allocation of the portion of the interface.

8. An electronic method for generating an interface, comprising the steps of:
executing an algorithm which includes at least one rule;
wherein the algorithm utilises the rule and at least one parameter value to allocate a portion of an interface to the display of a representation of at least one item.

9. A method in accordance with claim 8, comprising the further step of periodically iterating the method steps of claim 8.

10. A computer program, including at least one instruction capable of being executed by a computing system, which implements a method in accordance with Claim 8.

11. A computer readable medium including a computer program in accordance with Claim 8.

12. A data signal including at least one instruction being capable of being received and interpreted by a computing system, wherein the one instruction, on being interpreted by the computing system, implements a method in accordance with Claim 8.
